# EUROPÄISCHE PATENTSCHRIFT

(11) **EP 4 110 685 B1**
(45) Veröffentlichungstag und Bekanntmachung des Hinweises auf die Patenterteilung: **03.04.2024**
(21) Anmeldenummer: 21703869.4
(22) Anmeldetag: 03.02.2021
(51) Int. Cl.: B66F 9/06, B62D 53/00

(54) **HUBVORRICHTUNG EINES ROUTENZUGANHÄNGERS UND ROUTENZUGANHÄNGER MIT EINER HUBVORRICHTUNG**
LIFTING DEVICE OF A TUGGER TRAIN TRAILER AND TUGGER TRAIN TRAILER HAVING A LIFTING DEVICE
DISPOSITIF DE LEVAGE D'UNE REMORQUE DE TRAIN DE MANUTENTION ET REMORQUE DE TRAIN DE MANUTENTION COMPORTANT UN DISPOSITIF DE LEVAGE

(30) Priorität: 28.02.2020 DE 102020105367
(43) Veröffentlichungstag der Anmeldung: 04.01.2023
(73) Patentinhaber: LR Intralogistik GmbH, 84109 Wörth a. d. Isar (DE)
(72) Erfinder: ZIMMER, Michael, 84030 Ergolding (DE); BERGHAMMER, Fritz, 84028 Landshut (DE)
(74) Vertreter: Patentship Patentanwaltgesellschaft
(86) Internationale Anmeldenummer: PCT/EP2021/052476
(87) Internationale Veröffentlichungsnummer: WO 2021/170355

(56) Entgegenhaltungen:
- EP-A1- 3 543 096
- EP-A2- 2 805 852
- DE-A1-102014 100 865

## Beschreibung

Die Erfindung betrifft eine Hubvorrichtung eines Routenzuganhängers zum Anheben und Absenken einer in dem Routenzuganhänger mitgeführten Ladung.

Die Erfindung betrifft weiterhin einen Routenzuganhänger mit einem Fahrgestell und einer Hubvorrichtung.

Für den innerbetrieblichen Transport von Ladungen, beispielsweise im Produktionsbereich von Produktionsbetrieben, kommen zunehmend Routenzüge zum Einsatz, die aus einem Zugfahrzeug, beispielsweise einem Schlepper, und einer Mehrzahl von an dem Schlepper angehängten Routenzuganhängern bestehen, auf denen die Ladungen transportiert werden.

Die EP 2 805 852 A2 offenbart einen Routenzuganhänger mit einer auf zwei Hubarme wirkenden Hubvorrichtung.

Die EP 3 543 096 A1 offenbart ein Flurförderzeug mit einem Lastrahmen für fahrbare Lastträger, wobei der Lastrahmen mittels einer Hubeinrichtung anhebbar und absenkbar sind.

DE 10 2014 100 865 A1 offenbart eine Hubvorrichtung nach dem Obenbegriff des Anspruchs 1.

Aus der DE 10 2014 100 865 A1 ist auch ein Routenzuganhänger mit einem Fahrgestell bekannt, das ein Vorderachsmodul und ein Hinterachsmodul umfasst. Das Vorderachsmdoul und das Hinterachsmodul umfassen jeweils ein Hubmastprofil, in denen eine die Ladung aufnehmende Transportvorrichtung anhebbar und absenkbar angeordnet ist. Die Transportvorrichtung ist hierzu mit einem ersten Koppelabschnitt versehen, mit dem die Transportvorrichtung in dem Hubmastprofil des Vorderachsmoduls vertikal geführt ist, und mit einem zweiten Koppelabschnitt versehen, mit dem die Transportvorrichtung in dem Hubmastprofil des Hinterachsmoduls vertikal geführt ist. Zum Anheben und Absenken der Transportvorrichtung gegenüber den Achsmodulen des Fahrgestells ist eine Hubvorrichtung vorgesehen, die im Bereich jedes Koppelabschnitts der Transportvorrichtung eine Hubeinheit aufweist. Die Hubeinheiten sind als elektrische Gewindespindeln oder als elektrohydraulisch angetriebene Hubzylinder ausgebildet, deren Basisteil jeweils an dem entsprechenden Koppelabschnitt der Transportvorrichtung befestigt ist. Nach vertikal unten ausfahrbare Elemente der Hubeinheiten stützen sich auf dem zugeordneten Vorderachsmodul bzw. Hinterachsmodul ab.

Bei dem aus der DE 10 2014 100 865 A1 bekannten Routenzuganhänger umfasst somit die Hubvorrichtung zum Anheben und Absenken der Transportvorrichtung und somit zum Anheben und Absenken der mitgeführten Ladung eine als elektrische Gewindespindel oder als elektrohydraulisch angetriebene Hubzylinder ausgeführte Hubeinheit zwischen der Transportvorrichtung und dem Vorderachsmodul und eine weitere als elektrische Gewindespindel oder als elektrohydraulisch angetriebene Hubzylinder ausgeführte Hubeinheit zwischen der Transportvorrichtung und dem Hinterachsmodul, so dass die Hubvorrichtung mehrere elektrische Gewindespindeln oder elektrohydraulisch angetriebene Hubzylinder aufweist.

Beim Hub der in dem Routenzuganhänger mitgeführten Ladung mit einer Hubvorrichtung, die wie in der DE 10 2014 100 865 A1 mehrere elektrische Gewindespindeln umfasst, ist es erforderlich, dass die elektrischen Gewindespindeln synchron laufen müssen, um eine im Routenzuganhänger mitgeführte Ladung, beispielsweise Bodenroller, Trolleywagen, Paletten oder Gitterboxen, anheben zu können. Weiterhin müsse alle elektrischen Gewindespindeln mittels entsprechender Sensoren überwacht werden, um die Hubvorrichtung überwachen und den Hubzustand erkennen zu können, da bei Ausfall einer Gewindespindel die Gefahr des Ladungsverlustes besteht oder die Gefahr der Beschädigung der Hubvorrichtung. In der oberen Endlage der angehobenen Transportvorrichtung sind weiterhin die elektrischen Antriebsmotoren der elektrischen Gewindespindeln nicht lastfrei, da die Gewindespindeln nur bedingt selbsthemmend sind. Sofern es während des Transports der angehobenen Ladung in dem fahrenden Routenzuganhänger zu einem unbeabsichtigten Absenken der Ladung kommt, muss somit die Ladung nachgehoben werden, beispielsweise mittels einer die elektrischen Gewindespindeln ansteuernden elektronischen Steuereinrichtung.

Eine Hubvorrichtung eines Routenzuganhängers, die wie in der DE 10 2014 100 865 A1 mehrere elektrische Gewindespindeln umfasst, weist somit folgende Nachteile auf:
- Es sind mehrere elektrische Gewindespindeln zum Anheben und Absenken der Ladung erforderlich;
- es ist eine Synchronisierung der elektrischen Gewindespindeln notwendig;
- die elektrischen Antriebsmotoren der elektrischen Gewindespindeln sind in der oberen Endlage nicht lastfrei;
- Jede elektrische Gewindespindel muss einzeln und somit separat mittels entsprechender Sensoren überwacht werden.

Der vorliegenden Erfindung liegt die Aufgabe zugrunde, eine Hubvorrichtung eines Routenzuganhängers und einen Routenzuganhänger mit einer Hubvorrichtung zur Verfügung zu stellen, die einen oder mehrere der genannten Nachteile vermeidet.

Diese Aufgabe wird erfindungsgemäß gelöst durch eine Hubvorrichtung eines Routenzuganhängers zum Anheben und Absenken einer in dem Routenzuganhänger mitgeführten Ladung, wobei die Hubvorrichtung eine mittels eines Antriebsmotors angetriebene und um eine Drehachse drehbar gelagerte Hubwelle aufweist, an der mindestens ein die Ladung anhebendes und absenkendes Hubgestänge beabstandet zu der Drehachse der Hubwelle gelenkig angelenkt ist.

Eine derartige Hubvorrichtung mit einer von einem Antriebsmotor angetriebenen Hubwelle, an der zum Anheben der im Routenzuganhänger mitgeführten Ladung ein oder mehrere Hubgestänge beabstandet zu der Drehachse der Hubwelle gelenkig angelenkt, bildet eine Kurbelmechanik zum Heben und Senken von in dem Routenzuganhänger mitgeführten Lasten. Zum Antrieb der Hubwelle ist nur ein einziger Antriebsmotor erforderlich, wodurch sich ein geringer Bauaufwand der Hubvorrichtung erzielen lässt. An der Hubwelle können mehrere Hubgestänge angelenkt werden, wodurch alle Hubgestänge beim Drehen der Hubwelle gleichzeitig und synchron heben. Es ist somit weiterhin keine Synchronisierung mehrerer elektrischer Antriebe erforderlich.

Gemäß einer vorteilhaften Weiterbildung der Erfindung weist die Hubvorrichtung mindestens zwei Hubgestänge auf, die in Längsrichtung der Hubwelle beabstandet angeordnet sind. An der Hubwelle können in einfacher Weise entsprechende Hubgestänge gelenkig angelenkt werden, so dass die Hubvorrichtung in einfacher Weise durch Variierung der Anzahl und der Positionierung der Hubgestänge an die Anforderungen des Routenzuganhängers und der zu transportierenden Ladung angepasst werden kann.

Gemäß einer vorteilhaften Ausgestaltungsform der Erfindung ist das Hubgestänge an einer an der Hubwelle drehfest angeordneten Kurbelarmeinrichtung gelenkig angelenkt. Die Kurbelarmeinrichtung bildet somit einen Kurbelarm, der an der Hubwelle drehfest angeordnet ist und an dem das entsprechende Hubgestänge gelenkig angelenkt ist. Mit mehreren derartiger Kurbelarmeinrichtungen können somit durch Drehen der Hubwelle die Hubgestänge auf einfache Weise betätigt werden, um eine im Routenzuganhänger mitgeführte Ladung anzuheben und abzusenken.

Die Kurbelarmeinrichtung weist gemäß einer vorteilhaften Ausführungsform der Erfindung zwei an der Hubwelle axial beabstandet angeordnete Kurbelscheiben auf, zwischen denen das Hubgestänge angeordnet ist. Derartige Kurbelscheiben sind in einfacher Weise herstellbar. Mit derartigen Kurbelscheiben kann die Kurbelarmeinrichtung somit auf einfache Weise hergestellt werden. Sofern das entsprechende Gestänge jeweils zwischen zwei Kurbelscheiben angeordnet ist und mit den Kurbelscheiben gelenkig verbunden ist, kann ein günstiger Kraftfluss zwischen dem Gestänge und den Kurbelscheiben erzielt werden.

Gemäß einer vorteilhaften Ausführungsform der Erfindung ist das Hubgestänge mit einem parallel zur Drehachse der Hubwelle an der Kurbelarmeinrichtung angeordneten Befestigungsstift an der Kurbelarmeinrichtung gelenkig angelenkt, wodurch bei geringem Bauaufwand ein gelenkige Verbindung des Hubgestänges mit der Kurbelarmeinrichtung erzielt wird.

Gemäß einer vorteilhaften Weiterbildung der Erfindung ist das Hubgestänge im Bereich der Anlenkung an der Hubwelle als Hakenprofil ausgebildet, das derart ausgebildet ist, dass sich das Hakenprofil in der oberen Endlage des Hubgestänges mit einer Innenfläche an der Außenfläche der Hubwelle anlegt zur Abstützung des Hubgestänges an der Hubwelle. In der oberen Endlage des Hubgestänges und somit bei angehobener Ladung können sich somit die Hubgestänge mit dem entsprechenden Hakenprofil an der Hubwelle anlegen und abstützen, wodurch in der obere Endlage und somit bei angehobener Ladung der Antriebsmotor der Hubvorrichtung lastfrei gemacht wird.

Der Antriebsmotor, insbesondere eine elektrischer Antriebsmotor, steht gemäß einer vorteilhaften Ausführungsform der Erfindung mittels eines Getriebes, insbesondere eines Zugmittelgetriebes, mit der Hubwelle zu deren Antrieb in Wirkverbindung steht. Dies ermöglicht es auf einfache Weise, den Antriebsmotor seitlich neben der Hubwelle anzuordnen. Zudem kann mit dem Getriebe eine Untersetzung erzielt werden, um einen klein bauenden Antriebsmotor verwenden zu können. Das Zugmittelgetriebe kann als Kettengetriebe oder als Riemengetriebe, beispielsweise Zahnriemengetriebe, ausgebildet sein.

Besondere Vorteile sind erzielbar, wenn gemäß einer Weiterbildung der Erfindung in der oberen Endlage eine Totpunktverriegelung zwischen dem Hubgestänge und der Hubwelle ausgebildet ist. Dadurch wird auf einfache Weise verhindert, dass sich die angehobenen Ladung in dem fahrenden Routenzuganhänger unbeabsichtigt absenken kann.

Gemäß einer vorteilhaften Ausführungsform der Erfindung ist die Hubwelle als Keilwelle oder als Zahnwelle ausgebildet. An einer derartigen Hubwelle können auf einfache Weise eine beliebige Anzahl der Kurbelarmeinrichtungen angeordnet und in Längsrichtung der Hubwelle beliebig positioniert werden, um die Hubvorrichtung an die Anforderungen des Routenzuganhängers und der zu transportierenden Ladung anzupassen.

Die Kurbelarmeinrichtung ist vorteilhafterweise mit einem mit der Keilwelle oder der Zahnwelle komplementär zusammenwirkenden Nabenprofil versehen. Mit einem derartigen Nabenprofil kann die Kurbelarmeinrichtung auf einfache Weise drehfest an der Hubwelle angeordnet werden.

Gemäß einer vorteilhaften Weiterbildung der Erfindung ist eine mit der Hubwelle in Wirkverbindung stehende Sensoreinrichtung vorgesehen. Bei der erfindungsgemäßen Hubvorrichtung kann mit einer einzigen Sensoreinrichtung, die die Drehstellung der Hubwelle detektiert, die Hubvorrichtung überwacht und der Hubzustand erkannt werden.

Gemäß einer vorteilhaften Weiterbildung der Erfindung ist die Hubwelle mit einer mechanischen Schnittstelle versehen, mit der ein Handwerkzeug zum manuellen Betätigen der Hubwelle in Wirkverbindung bringbar ist. Bei einem Ausfall des Antriebsmotors kann somit in einfacher Weise mit einem Handwerkzeug, das beispielsweise auf die Schnittstelle der Hubwelle aufgesteckt wird, die Hubwelle manuell betätigt werden, um die Ladung manuell anheben und absenken zu können. Das Handwerkzeug kann beispielsweise von einem Hebel gebildet werden.

Die Aufgabe wird ebenfalls gelöst durch einen Routenzuganhänger mit einem Fahrgestell, das zwei in Fahrzeuglängsrichtung beabstandet angeordnete Achsmodule aufweist, zwischen denen die mitgeführte Ladung angeordnet ist, und der mit einer erfindungsgemäßen Hubvorrichtung versehen ist.

Der Routenzuganhänger weist gemäß einer vorteilhaften Ausgestaltungsform der Erfindung einen die Achsmodule verbindenden Brückenrahmen auf, der an den Achsmodulen angeordnete Vertikalstützen und einen die Vertikalstützen verbindenden Längsträger aufweist, wobei an dem Längsträger die Hubwelle der Hubvorrichtung drehbar gelagert ist. Die Hubwelle ist hierbei bevorzugt in Längsrichtung des Längsträgers angeordnet. Der Brückenrahmen verbindet und überspannt somit die beiden Achsmodule zwischen denen die mitgeführte Ladung angeordnet ist. Die Hubwelle kann hierbei in einfacher und günstiger Weise an dem Längsträger des Brückenrahmens drehbar gelagert werden, wodurch mit den an der Hubwelle angelengten Hubgestängen die Ladung in einfacher Weise angehoben und abgesenkt werden kann.

Bei dem erfindungsgemäßen Routenzuganhänger ist es gemäß einer Ausführungsform möglich, zwischen den beiden Achsmodulen angeordnete Ladungsträger direkt mit den Hubgestängen anzuheben und abzusenken, beispielsweise indem die Hubgestänge an dem Ende mit entsprechenden Haken versehen sind, die an den Ladungsträgern eingehängt werden können.

Gemäß einer vorteilhafte Ausführungsform der Erfindung weist der Routenzuganhänger zur Aufnahme der Ladung eine Transportvorrichtung auf, wobei die Transportvorrichtung zwischen den Achsmodulen angeordnet ist und mittels der Hubvorrichtung gegenüber den Achsmodulen anhebbar und absenkbar angeordnet ist, wobei das Hubgestänge der Hubvorrichtung mit der Transportvorrichtung in Wirkverbindung steht. Die Ladung wird somit von der Transportvorrichtung aufgenommen, die mittels der Hubvorrichtung anhebbar und absenkbar ist.

Die Transportvorrichtung ist hierbei vorteilhafterweise an den Achsmodulen mittels jeweils einer Vertikalführung anhebbar und absenkbar angeordnet. Mit entsprechenden Vertikalführungen kann in einfacher Weise eine vertikale Führung der Transportvorrichtung an den beiden Achsmodulen erzielt werden, so dass die Hubgestänge nur die Hubkräfte zum Anheben der Transportvorrichtung übertragen müssen.

Die Transportvorrichtung weist gemäß einer vorteilhaften Ausgestaltungsform der Erfindung eine Plattform zum Auffahren von Rollen aufweisenden Bodenrollern als Ladungsträger der Ladung auf, wobei sich die Bodenroller mit Rollen auf der Plattform abstützen. Auf eine derartige eine Plattform aufweisenden Transportvorrichtung können somit in einfacher Weise ein oder mehrere Bodenroller mit ihren Rollen aufgefahren werden und in dem Routenzuganhänger transportiert werden. Mit der erfindungsgemäßen Hubvorrichtung kann die Plattform mit den darauf stehenden Bodenrollern in einfacher Weise angehoben und abgesenkt werden.

Die Transportvorrichtung weist gemäß einer alternativen und vorteilhaften Ausgestaltungsform der Erfindung mehrere Zinken zur Aufnahme der Ladung auf. Mit Zinken können Paletten oder Gitterboxen als Ladungsträger der Ladung in einfacher Weise aufgenommen werden. Mit der erfindungsgemäßen Hubvorrichtung können mehrere Zinken in einfacher Weise gleichzeitig angehoben und abgesenkt werden

Die erfindungsgemäße Hubvorrichtung und ein Routenzuganhänger mit einer erfindungsgemäßen Hubvorrichtung weist eine Reihe von Vorteilen auf.

Die erfindungsgemäße Hubvorrichtung weist eine einfachen und kostengünstigen Aufbau auf und ermöglicht es, mit nur einem einzigen Antriebsmotor mehrere Ladungsträger anzuheben und abzusenken. Sofern mehrere Hubgestänge von der Hubwelle betätigt werden, ist der Hub der Hubgestänge über die Hubwelle mechanisch gekoppelt. Sofern somit mit der Hubvorrichtung mehrere Ladungsträger angehoben werden, heben mit der erfindungsgemäßen Hubvorrichtung alle Ladungsträger synchron an. Mit dem Hakenprofil an den Hubgestängen, die sich in der oberen Endlage des Hubgestänges mit einer Innenfläche an der Außenfläche der Hubwelle anlegt und das Hubgestänges an der Hubwelle abstützt, wird erzielt, dass in der oberen Endlage der Antriebsmotor lastfrei ist. Die von der Hubvorrichtung erzielbare Hubhöhe kann in einfacher Weise durch eine Veränderung des Drehwinkels der Hubwelle angepasst werden. Größere Hubhöhenänderungen können durch einfachen Austausch der Kurbelarmeinrichtungen und somit der Kurbelscheiben mit anderen Kurbelarmen erzielt werden. Bei einem Ausfall des Antriebsmotors der Hubvorrichtung kann über ein mit der Schnittstelle der Hubwelle in Verbindung gebrachtes Handwerkzeug die Hubwelle von Hand und somit manuell betätigt werden, um den Hub der Ladungsträger manuell zu erzeugen. Bei der erfindungsgemäßen Hubvorrichtung muss lediglich mit einer einzigen Sensoreinrichtung die Hubwelle detektiert werden, um den Hubzustand der Hubvorrichtung erkennen zu können. Die erfindungsgemäße Hubvorrichtung ist flexibel anpassbar auf die Anzahl der Ladungsträger, die anzuhebenden Lasten, die Hubhöhe und die Hubgeschwindigkeit, da die Anzahl der Hubgestänge und die Position der Hubgestänge in Längsrichtung der Hubwelle beliebig wählbar ist und verschiedene Kurbelarmeinrichtungen mit unterschiedlichen Kurbelarmen an der Hubwelle befestigbar sind.

Weitere Vorteile und Einzelheiten der Erfindung werden anhand des in den schematischen Figuren dargestellten Ausführungsbeispiels näher erläutert. Hierbei zeigt
- Figur 1: einen erfindungsgemäßen Routenzuganhänger mit einer erfindungsgemäßen Hubvorrichtung in einer perspektivischen Darstellung,
- Figur 2: den Routenzuganhänger der Figur 1 in einer Seitenansicht in einer abgesenkten Position einer Transportvorrichtung,
- Figur 3: den Routenzuganhänger der Figur 2 mit der Transportvorrichtung in der angehobenen Position,
- Figur 4: einen Ausschnitt der erfindungsgemäßen Hubvorrichtung,
- Figuren 5a bis 5d: die erfindungsgemäße Hubvorrichtung in mehreren Hubstellungen.

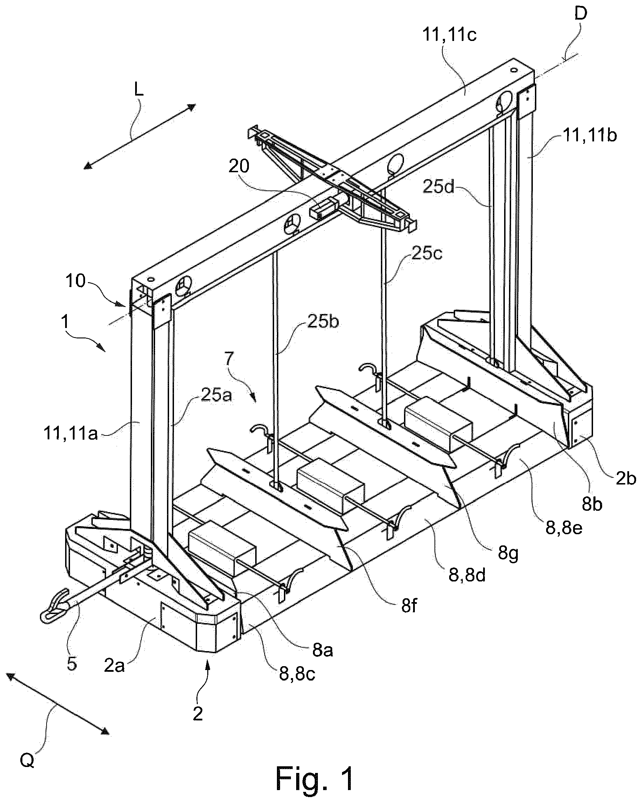

In den Figuren 1 bis 3 ist ein erfindungsgemäßer Routenzuganhänger 1 eines Routenzugs dargestellt.

Der Routenzuganhänger 1 weist ein Fahrgestell 2, das zwei in Fahrzeuglängsrichtung L beabstandet angeordnete Achsmodule 2a, 2b aufweist. Das Achsmodul 2a ist als Vorderachsmodul ausgebildet und mit Vorderrädern 3 versehen. Das Achsmodul 2b ist als Hinterachsmodul ausgebildet und mit Hinterrädern 4 versehen. An dem Achsmodul 2a ist eine lenkbare Deichsel 5 angeordnet, mit der der Routenzuganhänger 1 an ein Zugfahrzeug oder einen vorausfahrenden Routenzuganhänger des Routenzugs angehängt werden kann. Das Achsmodul 2b ist mit einer Anhängekupplung 6 versehen, an die ein weiterer Routenzuganhänger des Routenzugs angehängt werden kann. Die Vorderräder 3 und/oder die Hinterräder 4 können gelenkt sein. Sofern sowohl die Vorderräder 3 als auch die Hinterräder 4 gelenkt sind, kann die Lenkbewegung der Vorderräder und die Lenkbewegung der Hinterräder gekoppelt sein.

Zwischen dem Achsmodul 2a und dem Achsmodul 2b kann eine Ladung mitgeführt werden. Der Routenzuganhänger 1 weist zur Aufnahme der Ladung eine Transportvorrichtung 7 auf, die zwischen den beiden Achsmodulen 2a, 2b angeordnet ist.

Die Transportvorrichtung 7 ist mittels einer Hubvorrichtung 10 gegenüber den Achsmodulen 2a, 2b anhebbar und absenkbar. Zur vertikalen Führung der Transportvorrichtung 7 ist jeweils eine nicht näher dargestellte Vertikalführung zwischen der Transportvorrichtung 7 und dem Achsmodul 2a sowie zwischen der Transportvorrichtung 7 und dem Achsmodul 2a vorgesehen.

Im dargestellten Ausführungsbeispiel weist die Transportvorrichtung 7 eine Plattform 8 zum Auffahren von nicht näher dargestellten Bodenrollern als Ladungsträger der Ladung auf, die sich mit Rollen auf der Plattform 8 abstützen. Die Plattform 8 erstreckt sich in Fahrzeugquerrichtung Q über die gesamte Fahrzeugbreite, so dass die Bodenroller von beiden Fahrzeugseiten auf die Plattform 8 hinauf- und herunter geschoben werden können. Im dargestellten Ausführungsbeispiel weist die Plattform 8 im Bereich des Achsmoduls 2a eine in Fahrzeugquerrichtung Q verlaufende vertikale Querplatte 8a auf, die über eine Vertikalführung an dem Achsmodul 2a in vertikaler Richtung geführt ist. Entsprechend weist die Plattform 8 im Bereich des Achsmoduls 2b eine in Fahrzeugquerrichtung Q verlaufende vertikale Querplatte 8b auf, die über eine Vertikalführung an dem Achsmodul 2b in vertikaler Richtung geführt ist.

Die Plattform 8 weist im dargestellten Ausführungsbeispiel - in Fahrzeuglängsrichtung L gesehen - drei Einfahrkanäle 8c, 8d, 8e auf, auf die jeweils ein Bodenroller aufgefahren werden kann. Zwischen dem vorderen Einfahrkanal 8c und dem mittleren Einfahrkanal 8d ist ein in Fahrzeugquerrichtung Q verlaufende vertikaler Trennsteg 8f angeordnet. Entsprechend ist zwischen dem mittleren Einfahrkanal 8d und dem hinteren Einfahrkanal 8e ein in Fahrzeugquerrichtung Q verlaufende vertikaler Trennsteg 8g angeordnet.

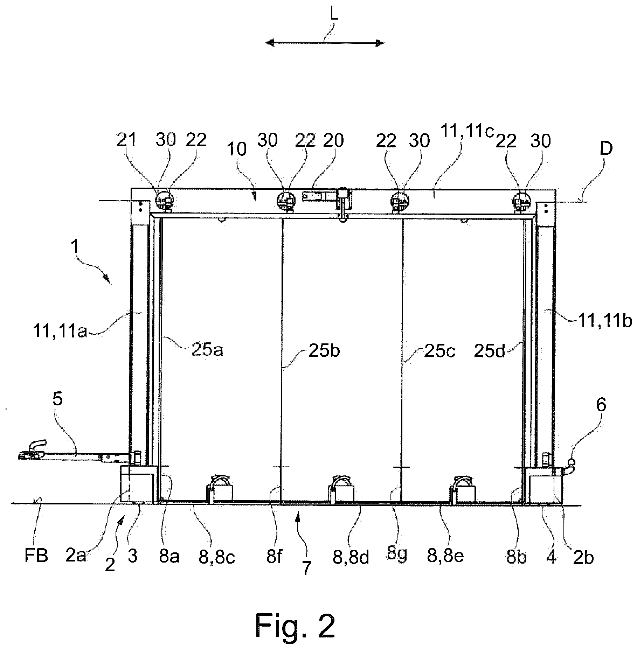

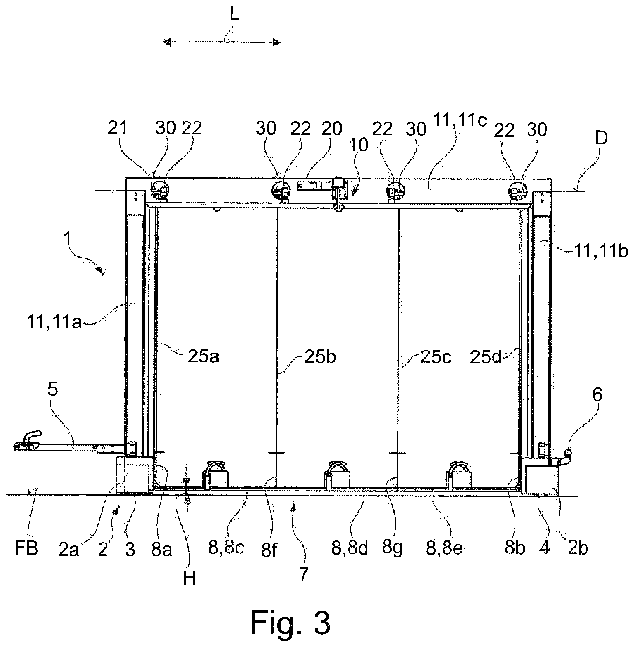

In der Figur 2 ist die Transportvorrichtung 7 in der abgesenkten Stellung und somit in der unteren Endlage dargestellt, in der die Plattform 8 auf die Fahrbahn FB abgesenkt ist, so dass die Bodenroller mit ihren Rollen auf die Einfahrkanäle 8c, 8d, 8e der Plattform 8 aufgeschoben werden können. Die Figur 3 zeigt die Transportvorrichtung 7 in der angehobenen Stellung und somit in der oberen Endlage dargestellt, in der die Plattform 8 mittels der Hubvorrichtung 10 um den Hub H von der Fahrbahnoberfläche FB angehoben ist.

Der Routenzuganhänger 1 weist weiterhin einen die Achsmodule 2a, 2b verbindenden - in der Seitenansicht - bügelförmigen Brückenrahmen 11 auf. Der Brückenrahmen 11 besteht aus einer an dem Achsmodul 2a angeordneten Vertikalstütze 11a, einer an dem Achsmodul 2b angeordneten Vertikalstütze 11b und einem die Vertikalstützen 11a, 11b verbindenden Längsträger 11c. Der Brückenrahmen 11 ist - in Fahrzeugquerrichtung Q gesehen - mittig angeordnet.

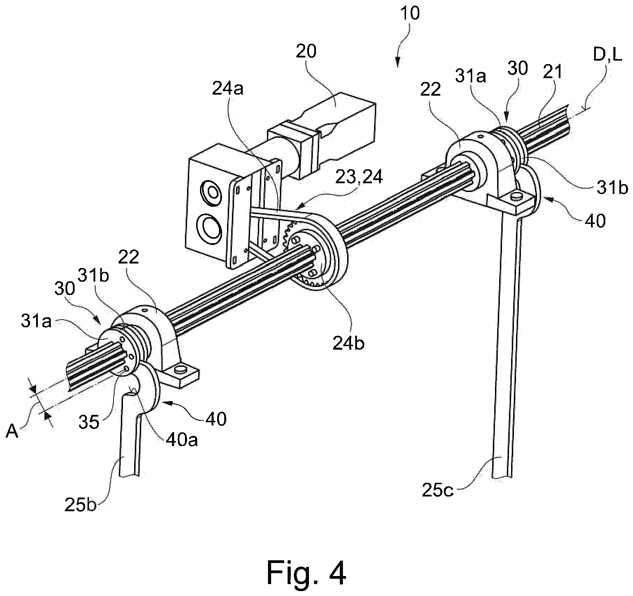

Der Aufbau der Hubvorrichtung 10, mittels der die von der Plattform 8 gebildete Transportvorrichtung 7 relativ den Achsmodulen 2a, 2b angehoben und abgesenkt werden kann, wird im Folgenden in Verbindung mit den Figuren 4 bis 5d beschrieben.

Die Hubvorrichtung 10 weist eine mittels eines Antriebsmotors 20, beispielsweise eines Elektromotors, angetriebene und um eine Drehachse D drehbar gelagerte Hubwelle 21 auf. Die Hubwelle 21 ist mit der Drehachse D in Fahrzeuglängsrichtung L angeordnet. Im dargestellten Ausführungsbeispiel ist die Hubwelle 21 an dem Längsträger 11c des Brückenrahmens 11 drehbar gelagert. Zur Lagerung der Hubwelle 21 an dem Längsträger 11c sind entsprechende Lagereinrichtungen 22 vorgesehen. Die Hubwelle 21 ist hierzu in den als Rohrprofil ausgebildeten Längsträger 11c eingebaut. Der Antriebsmotor 20 ist ebenfalls an dem Längsträger 11c angebaut.

Der Antriebsmotor 20 steht weiterhin mittels eines Getriebes 23 mit der Hubwelle 21 zu deren Antrieb in Wirkverbindung. Das Getriebe 23 umfasst im dargestellten Ausführungsbeispiel ein Zugmittelgetriebe 24, das beispielsweise als Kettengetriebe ausgebildet sein kann. Das als Kettengetriebe ausgebildete Zugmittelgetriebe 24 umfasst eine von dem Antriebsmotor 20 angetriebene Kette 24a, die ein an der Hubwelle 21 drehfest befestigtes Kettenrad 24b antreibt.

An der Hubwelle 21 sind mehrere Hubgestänge 25a-25d beabstandet zu der Drehachse D der Hubwelle 21 gelenkig angelenkt und somit mit der Hubwelle 21 gelenkig verbunden, die zum Anheben und Absenken der Ladung mit der als Plattform 8 ausgebildete Transportvorrichtung 7 in Wirkverbindung stehen. Die Hubgestänge 25a-25d sind hierbei - wie in der Figur 4 ersichtlich ist, in der die Hubvorrichtung 10 in der unteren Endlage dargestellt ist - mit einen Hebelarm bzw. Kurbelarm A an der Hubwelle 21 gelenkig angelenkt.

Die Hubgestänge 25a-25d sind durch entsprechende Ausnehmungen des Längsträgers 11c nach unten geführt und mit dem unteren Ende jeweils mit der Transportvorrichtung 7 verbunden. Bevorzugt sind die Hubgestänge 25a-25d an der Transportvorrichtung 7 gelenkig befestigt.

Die Hubgestänge 25a-25d sind in Längsrichtung der Hubwelle 21 und somit in Fahrzeuglängsrichtung L beabstandet voneinander angeordnet. Im dargestellten Ausführungsbeispiel ist das Hubgestänge 25a mit der Plattform 8 im Bereich der vorderen Querplatte 8a verbunden, das Hubgestänge 25b mit der Plattform 8 im Bereich des Trennstegs 8f verbunden, das Hubgestänge 25c mit der Plattform 8 im Bereich des Trennstegs 8g verbunden und das Hubgestänge 25d mit der Plattform 8 im Bereich der hinteren Querplatte 8b verbunden.

Zur gelenkigen Befestigung der Hubgestänge 25a-25 an der Hubwelle 21 ist jedes Hubgestänge 25a-25d an einer an der Hubwelle 21 drehfest angeordneten Kurbelarmeinrichtung 30 gelenkig angelenkt. Die Kurbelarmeinrichtung 30 weist im dargestellten Ausführungsbeispiel - wie aus der Figur 4 ersichtlich ist - jeweils zwei an der Hubwelle 21 axial beabstandet angeordnete Kurbelscheiben 31a, 31b auf, die miteinander verbunden sind und zwischen denen das entsprechende Hubgestänge 25a-25d angeordnet ist. Die Gelenkverbindung zwischen dem Hubgestänge 25a-25d und den Kurbelscheiben 31a, 31b ist im dargestellten Ausführungsbeispiel jeweils von einem Befestigungsstift 35 gebildet, der um den Hebelarm bzw. Kurbelarm A parallel versetzt zur Drehachse D der Hubwelle 21 in entsprechenden Aufnahmebohrungen der Kurbelscheiben 31a, 31b angeordnet ist. Der Befestigungsstift 35 ist weiterhin in einer Aufnahmebohrung am oberen Ende des entsprechenden Hubgestänge 25a-25d aufgenommen.

Wie aus der Figur 4 ersichtlich ist, ist das Hubgestänge 25a-25d im Bereich der gelenkigen Anlenkung an der Kurbelarmeinrichtung 30 und somit im oberen Endbereich jeweils als Hakenprofil 40 ausgebildet. Das Hakenprofil 40 ist derart ausgebildet, dass sich das Hakenprofil 40 in der oberen Endlage des Hubgestänges 25a-25d mit einer Innenfläche 40a an der Außenfläche der Hubwelle 21 anlegt, so dass in der der oberen Endlage die vertikalen Kräfte der Hubgestänge 25a-25d an der Hubwelle 21 abgestützt werden.

Die Hubwelle 21 ist im dargestellten Ausführungsbeispiel als Keilwelle ausgebildet. Die Hubwelle 21 ist über die gesamte Länge mit einem entsprechenden Keilwellenprofil versehen.

Die Kurbelarmeinrichtung 30 ist zur drehfesten Verbindung mit der Hubwelle 21 mit einem mit dem Keilwellenprofil der als Keilwelle ausgebildete Hubwelle 21 komplementär zusammenwirkenden Nabenprofil versehen.

Die Hubwelle 21 ist weiterhin mit einer nicht näher dargestellten mechanischen Schnittstelle versehen, mit der ein Handwerkzeug zum manuellen Betätigen der Hubwelle 21 in Wirkverbindung bringbar ist. Die Schnittstelle ist bevorzugt von dem vorderen Ende und/oder dem hinteren Ende der als Keilwelle ausgebildeten Hubwelle 21 gebildet, das über das offene Rohrende des Längsträgers 11c zugänglich ist, so dass beim Ausfall des Antriebsmotors 20 über das offene Rohrende des Längsträgers 11c ein Handwerkzeug, beispielsweise ein Hebel, auf das Wellende der als Keilwelle ausgebildete Hubwelle 21 aufgesteckt werden kann, um die Hubwelle 21 manuell drehen zu können.

Die auf der Hubwelle 21 sitzenden und drehfest mit der Hubwelle 21 verbundenen Kurbelarmeinrichtung 30, die mit dem Hubgestänge 25a-25d verbunden sind, bilden somit eine Kurbelmechanik zum Anheben und Absenken der Transportvorrichtung 7.

Die die Hubwelle 21, die Kurbelarmeinrichtungen 30 und die Hubgestänge 25a-25d umfassende Hubvorrichtung 10 lässt sich in einfacher Weise an unterschiedliche Routenzuganhänger 1 und an unterschiedliche Transportvorrichtungen 7 anpassen und erweiteren, durch die Verschiebbarkeit der Kurbelarmeinrichtungen 30 auf der Hubwelle 21 und eine beliebige Anzahl der Kurbelarmeinrichtungen 30 und somit der Hubgestänge 25a-25d an der Hubwelle 21.

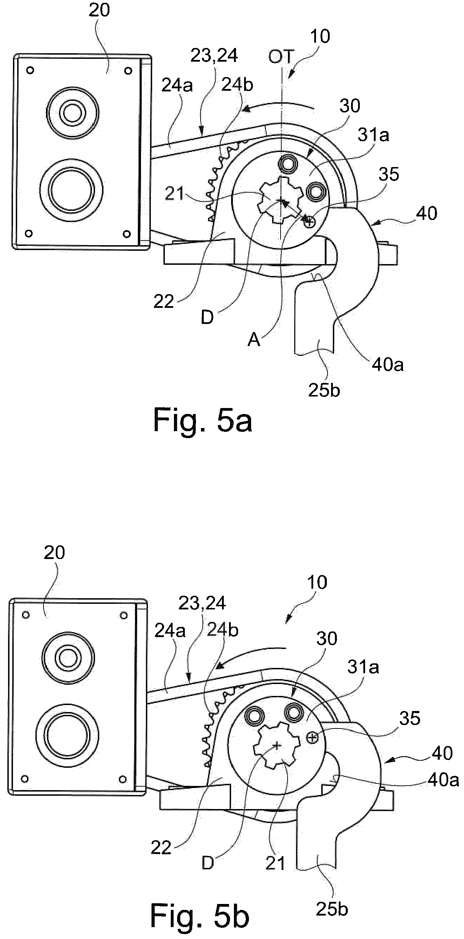

Der Hebevorgang der Transportvorrichtung 7 des Routenzuganhängers 1 mittels der Hubvorrichtung 10 wird im Folgenden anhand der Figuren 5a bis 5d beschrieben.

In der Figur 5a befindet sich die Hubvorrichtung 10 in der unteren Endlage gemäß der Figur 2.

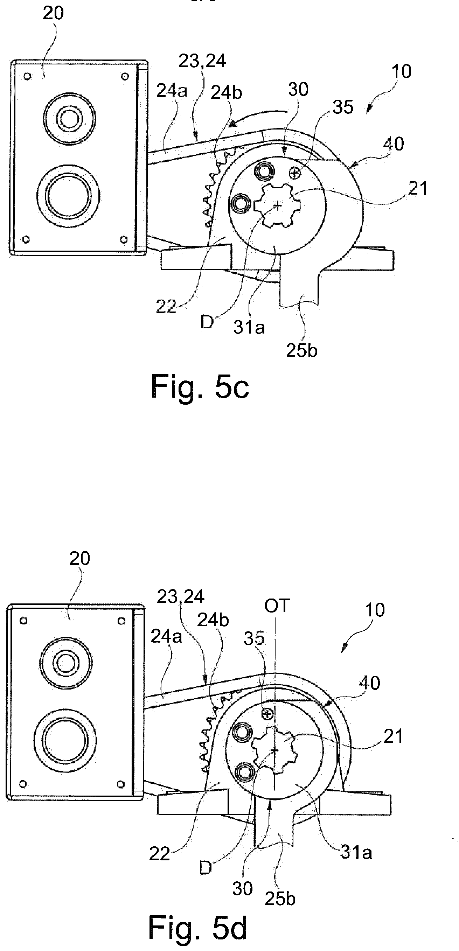

Wird die Hubwelle 21 mittels des Antriebsmotors 20 im Gegenuhrzeigersinn gedreht, werden die mit dem Kurbelarm A an der Hubwelle 21 angelenkten Hubgestänge 25a-25d nach oben betätigt, wie in den Figuren 5b und 5c dargestellt ist. Durch die mechanische Kopplung der Hubgestänge 25a-25d an der Hubwelle 21 heben alle Hubgestänge 25a-25d gleichzeitig und synchron an.

In der Figur 5d befindet sich die Hubvorrichtung 10 in der oberen Endlage gemäß der Figur 3. Die von dem Befestigungsstift 35 gebildete Gelenkverbindung des Hebelgestänges 25a-25d überschreitet hierbei den in der Vertikalebene liegenden oberen Totpunkt OT. Weiterhin legen sich beim Überschreiten des oberen Totpunktes OT die Hakenprofile 40 der Hubgestänge 25a-25d mit den Innenflächen 40a an der Außenfläche der Hubwelle 21 an, so dass die an den Hubgestängen 25a-25b nach vertikal unten angreifenden Kräfte an der Hubwelle 21 abgestützt werden. Dies führt dazu, dass in der oberen Endlage der Antriebsmotor 20 lastfrei ist.

Weiterhin wird durch das Überschreiten des oberen Totpunktes OT in der oberen Endlage eine Totpunktverriegelung zwischen dem Hubgestänge 25a-25d und der Hubwelle 21 erzielt, so dass ein unbeabsichtigtes Absenken der angehobenen Transportvorrichtung 7 verhindert wird.

## Patentansprüche

1. Hubvorrichtung (10) eines Routenzuganhängers (1) zum Anheben und Absenken einer in dem Routenzuganhänger (1) mitgeführten Ladung, **dadurch gekennzeichnet, dass** die Hubvorrichtung (10) eine mittels eines Antriebsmotors (20) angetriebene und um eine Drehachse (D) drehbar gelagerte Hubwelle (21) aufweist, an der mindestens ein die Ladung anhebendes und absenkendes Hubgestänge (25a, 25b; 25c; 25d) beabstandet zu der Drehachse (D) der Hubwelle (21) gelenkig angelenkt ist.

2. Hubvorrichtung nach Anspruch 1, **dadurch gekennzeichnet, dass** die Hubvorrichtung (10) mindestens zwei Hubgestänge (25a, 25b, 25c, 25d) aufweist, die in Längsrichtung der Hubwelle (21) beabstandet angeordnet sind.

3. Hubvorrichtung nach Anspruch 1 oder 2, **dadurch gekennzeichnet, dass** das Hubgestänge (25a; 25b; 25c; 25d) an einer an der Hubwelle (21) drehfest angeordneten Kurbelarmeinrichtung (30) gelenkig angelenkt ist.

4. Hubvorrichtung nach Anspruch 3, **dadurch gekennzeichnet, dass** die Kurbelarmeinrichtung (30) zwei an der Hubwelle (21) axial beabstandet angeordnete Kurbelscheiben (31a, 31b) aufweist, zwischen denen das Hubgestänge (25a; 25b; 25c; 25d) angeordnet ist.

5. Hubvorrichtung nach Anspruch 3 oder 4, **dadurch gekennzeichnet, dass** das Hubgestänge (25a; 25b; 25c; 25d) mit einem parallel zur Drehachse (D) an der Kurbelarmeinrichtung (30) angeordneten Befestigungsstift (35) an der Kurbelarmeinrichtung (30) gelenkig angelenkt ist.

6. Hubvorrichtung nach einem der Ansprüche 1 bis 5, **dadurch gekennzeichnet, dass** das Hubgestänge (25a; 25b; 25c; 25d) im Bereich der Anlenkung an der Hubwelle (21) als Hakenprofil (40) ausgebildet ist, das derart ausgebildet ist, dass sich das Hakenprofil (40) in der oberen Endlage des Hubgestänges (25a; 25b; 25c; 25d) mit einer Innenfläche (40a) an der Außenfläche der Hubwelle (21) anlegt zur Abstützung des Hubgestänges (25a; 25b; 25c; 25d) an der Hubwelle (21).

7. Hubvorrichtung nach einem der Ansprüche 1 bis 6, **dadurch gekennzeichnet, dass** der Antriebsmotor (20) mittels eines Getriebes (23), insbesondere eines Zugmittelgetriebes (24), mit der Hubwelle (21) zu deren Antrieb in Wirkverbindung steht.

8. Hubvorrichtung nach einem der Ansprüche 1 bis 7, **dadurch gekennzeichnet, dass** in der oberen Endlage eine Totpunktverriegelung zwischen dem Hubgestänge (25a; 25b; 25c; 25d) und der Hubwelle (21) ausgebildet.

9. Hubvorrichtung nach einem der Ansprüche 1 bis 8, **dadurch gekennzeichnet, dass** die Hubwelle (21) als Keilwelle oder als Zahnwelle ausgebildet ist.

10. Hubvorrichtung nach Anspruch 9, **dadurch gekennzeichnet, dass** die Kurbelarmeinrichtung (30) mit einem mit der Keilwelle oder der Zahnwelle komplementär zusammenwirkenden Nabenprofil versehen ist.

11. Hubvorrichtung nach einem der Ansprüche 1 bis 10, **dadurch gekennzeichnet, dass** eine mit der Hubwelle (21) in Wirkverbindung stehende Sensoreinrichtung vorgesehen ist.

12. Hubvorrichtung nach einem der Ansprüche 1 bis 11, **dadurch gekennzeichnet, dass** die Hubwelle (21) mit einer mechanischen Schnittstelle versehen ist, mit der ein Handwerkzeug zum manuellen Betätigen der Hubwelle (21) in Wirkverbindung bringbar ist.

13. Routenzuganhänger (1) mit einem Fahrgestell (2), das zwei in Fahrzeuglängsrichtung (L) beabstandet angeordnete Achsmodule (2a, 2b) aufweist, zwischen denen die mitgeführte Ladung angeordnet ist, wobei der Routenzuganhänger (1) mit einer Hubvorrichtung (10) nach einem der vorangegangenen Ansprüche versehen ist.

14. Routenzuganhänger nach Anspruch 13, **dadurch gekennzeichnet, dass** der Routenzuganhänger (1) einen die Achsmodule (2a, 2b) verbindenden Brückenrahmen (11) aufweist, der an den Achsmodulen (2a, 2b) angeordnete Vertikalstützen (11a, 11b) und einen die Vertikalstützen (11a, 11b) verbindenden Längsträger (11c) aufweist, wobei an dem Längsträger (11c) die Hubwelle (21) der Hubvorrichtung (10) drehbar gelagert ist.

15. Routenzuganhänger nach Anspruch 13 oder 14, **dadurch gekennzeichnet, dass** der Routenzuganhänger (1) zur Aufnahme der Ladung eine Transportvorrichtung (7) aufweist, wobei die Transportvorrichtung (7) zwischen den Achsmodulen (2a, 2b) angeordnet ist und mittels der Hubvorrichtung (10) gegenüber den Achsmodulen (2a, 2b) anhebbar und absenkbar angeordnet ist, wobei das Hubgestänge (25a; 25b; 5c; 25d) der Hubvorrichtung (10) mit der Transportvorrichtung (7) in Wirkverbindung steht.

16. Routenzuganhänger nach Anspruch 15, **dadurch gekennzeichnet, dass** die Transportvorrichtung (7) an den Achsmodulen (2a, 2b) mittels jeweils einer Vertikalführung anhebbar und absenkbar angeordnet ist.

17. Routenzuganhänger nach Anspruch 15 oder 16, **dadurch gekennzeichnet, dass** die Transportvorrichtung (7) eine Plattform (8) zum Auffahren von Rollen aufweisenden Bodenrollern als Ladung aufweist, wobei sich die Bodenroller mit Rollen auf der Plattform (8) abstützen.

18. Routenzuganhänger nach Anspruch 15 oder 16, **dadurch gekennzeichnet, dass** die Transportvorrichtung (7) Zinken zur Aufnahme der Ladung aufweist.

## Claims

1. Lifting device (10) of a tugger train trailer (1) for raising and lowering a load carried in the tugger train trailer (1), **characterized in that** the lifting device (10) comprises a lifting shaft (21) driven by means of a drive motor (20) and rotatably mounted about an axis of rotation (D), to which at least one lifting linkage (25a, 25b; 25c; 25d) raising and lowering the load is attached in an articulated manner, spaced apart from the axis of rotation (D) of the lifting shaft (21).

2. Lifting device according to Claim 1, **characterized in that** the lifting device (10) has at least two lifting linkages (25a, 25b, 25c, 25d) that are arranged spaced apart in the longitudinal direction of the lifting shaft (21).

3. Lifting device according to Claim 1 or 2, **characterized in that** the lifting linkage (25a; 25b; 25c; 25d) is attached in an articulated manner to a crank arm assembly (30) arranged on the lifting shaft (21) in a non-rotatable manner.

4. Lifting device according to Claim 3, **characterized in that** the crank arm assembly (30) has two crank discs (31a, 31b) arranged on the lifting shaft (21) in an axially spaced manner, between which crank discs the lifting linkage (25a; 25b; 25c; 25d) is arranged.

5. Lifting device according to Claim 3 or 4, **characterized in that** the lifting linkage (25a; 25b; 25c; 25d) is connected to the crank arm assembly (30) in an articulated manner with a fastening pin (35) arranged parallel to the axis of rotation (D) on the crank arm assembly (30).

6. Lifting device according to any one of Claims 1 to 5, **characterized in that** the lifting linkage (25a; 25b; 25c; 25d) in the region of the articulation to the lifting shaft (21) is configured as a hook profile (40) that is configured in such a manner that the hook profile (40) abuts against the outer surface of the lifting shaft (21) with an inner surface (40a) in the upper end position of the lifting linkage (25a; 25b; 25c; 25d) to support the lifting linkage (25a; 25b; 25c; 25d) on the lifting shaft (21).

7. Lifting device according to any one of Claims 1 to 6, **characterized in that** the drive motor (20) is operatively connected to the lifting shaft (21) to drive it by means of a transmission (23), in particular a traction drive (24).

8. Lifting device according to any one of Claims 1 to 7, **characterized in that** a dead centre lock is configured between the lifting linkage (25a; 25b; 25c; 25d) and the lifting shaft (21) in the upper end position.

9. Lifting device according to any one of Claims 1 to 8, **characterized in that** the lifting shaft (21) is configured as a spline shaft or as a toothed shaft.

10. Lifting device according to Claim 9, **characterized in that** the crank arm mechanism (30) is provided with a hub profile that interacts in a complementary manner with the spline shaft or the toothed shaft.

11. Lifting device according to any one of Claims 1 to 10, **characterized in that** a sensor device that is operatively connected to the lifting shaft (21) is provided.

12. Lifting device according to any one of Claims 1 to 11, **characterized in that** the lifting shaft (21) is provided with a mechanical interface, with which a hand tool for manually actuating the lifting shaft (21) can be brought into operative connection.

13. Tugger train trailer (1) comprising a chassis (2) which has two axle modules (2a, 2b) arranged spaced apart in the longitudinal vehicle direction (L), between which the transported load is arranged, wherein the tugger train trailer (1) is provided with a lifting device (10) according to one of the preceding claims.

14. Tugger train trailer according to Claim 13, **characterized in that** the tugger train trailer (1) comprises a bridge frame (11) connecting the axle modules (2a, 2b), which has vertical supports (11a, 11b) arranged on the axle modules (2a, 2b) and a longitudinal beam (11c) connecting the vertical supports (11a, 11b), wherein the lifting shaft (21) of the lifting device (10) is rotatably mounted on the longitudinal beam (11c).

15. Tugger train trailer according to Claim 13 or 14, **characterized in that** the tugger train trailer (1) comprises a transport device (7) for receiving the load, wherein the transport device (7) is arranged between the axle modules (2a, 2b) and is arranged such that it can be raised and lowered relative to the axle modules (2a, 2b) by means of the lifting device (10), wherein the lifting linkages (25a; 25b; 25c; 25d) of the lifting device (10) are operatively connected to the transport device (7).

16. Tugger train trailer according to Claim 15, **characterized in that** the transport device (7) is arranged on the axle modules (2a, 2b) such that it can be raised and lowered by means of a vertical guide in each case.

17. Tugger train trailer according to Claim 15 or 16, **characterized in that** the transport device (7) comprises a platform (8) for floor rollers with rollers as the load to drive onto, wherein the floor rollers with rollers are supported on the platform (8).

18. Tugger train trailer according to Claim 15 or 16, **characterized in that** the transport device (7) comprises multiple tines for receiving the load.

## Revendications

1. Dispositif de levage (10) d'une remorque de train de manutention (1) servant à soulever et à abaisser une charge transportée dans la remorque de train de manutention (1), **caractérisé en ce que** le dispositif de levage (10) présente un arbre de levage (21) entraîné au moyen d'un moteur d'entraînement (20) et monté rotatif autour d'un axe de rotation (D), arbre de levage auquel au moins une tringlerie de levage (25a, 25b ; 25c ; 25d) soulevant et abaissant la charge est accouplée de manière articulée de façon espacée de l'axe de rotation (D) de l'arbre de levage (21).

2. Dispositif de levage selon la revendication 1, **caractérisé en ce que** le dispositif de levage (10) présente au moins deux tringleries de levage (25a, 25b, 25c, 25d) qui sont disposées de manière espacée dans la direction longitudinale de l'arbre de levage (21).

3. Dispositif de levage selon la revendication 1 ou 2, **caractérisé en ce que** la tringlerie de levage (25a ; 25b ; 25c ; 25d) est accouplée de manière articulée à un dispositif à bras de manivelle (30) disposé de manière solidaire en rotation sur l'arbre de levage (21).

4. Dispositif de levage selon la revendication 3, **caractérisé en ce que** le dispositif à bras de manivelle (30) présente deux disques de manivelle (31a, 31b) disposés de manière espacée axialement sur l'arbre de levage (21), disques entre lesquels la tringlerie de levage (25a ; 25b ; 25c ; 25d) est disposée.

5. Dispositif de levage selon la revendication 3 ou 4, **caractérisé en ce que** la tringlerie de levage (25a ; 25b ; 25c ; 25d) est accouplée de manière articulée au dispositif à bras de manivelle (30) à l'aide d'une goupille de fixation (35) disposée sur le dispositif à bras de manivelle (30) parallèlement à l'axe de rotation (D) .

6. Dispositif de levage selon l'une des revendications 1 à 5, **caractérisé en ce que** la tringlerie de levage (25a ; 25b ; 25c ; 25d), dans la région de l'accouplement à l'arbre de levage (21), est réalisée sous forme de profilé en forme de crochet (40), qui est réalisé de telle sorte que le profilé en forme de crochet (40), dans la position terminale supérieure de la tringlerie de levage (25a ; 25b ; 25c ; 25d), s'applique contre la surface extérieure de l'arbre de levage (21) par une surface intérieure (40a) pour le support de la tringlerie de levage (25a ; 25b ; 25c ; 25d) sur l'arbre de levage (21) .

7. Dispositif de levage selon l'une des revendications 1 à 6, **caractérisé en ce que** le moteur d'entraînement (20) est en liaison fonctionnelle avec l'arbre de levage (21) pour son entraînement au moyen d'une transmission (23), en particulier d'une transmission à moyen de traction (24).

8. Dispositif de levage selon l'une des revendications 1 à 7, **caractérisé en ce que**, dans la position terminale supérieure, un verrouillage de point mort est réalisé entre la tringlerie de levage (25a ; 25b ; 25c ; 25d) et l'arbre de levage (21).

9. Dispositif de levage selon l'une des revendications 1 à 8, **caractérisé en ce que** l'arbre de levage (21) est réalisé sous forme d'arbre cannelé ou sous forme d'arbre dentelé.

10. Dispositif de levage selon la revendication 9, **caractérisé en ce que** le dispositif à bras de manivelle (30) est doté d'un profilé de moyeu coopérant de manière complémentaire avec l'arbre cannelé ou l'arbre dentelé.

11. Dispositif de levage selon l'une des revendications 1 à 10, **caractérisé en ce qu'**un dispositif de détection en liaison fonctionnelle avec l'arbre de levage (21) est prévu.

12. Dispositif de levage selon l'une des revendications 1 à 11, **caractérisé en ce que** l'arbre de levage (21) est doté d'une interface mécanique avec laquelle un outil à main servant à l'actionnement manuel de l'arbre de levage (21) peut être amené en liaison fonctionnelle.

13. Remorque de train de manutention (1) comportant un châssis (2), qui présente deux modules d'essieu (2a, 2b) disposés de manière espacée dans la direction longitudinale du véhicule (L), modules entre lesquels la charge transportée est disposée, la remorque de train de manutention (1) étant dotée d'un dispositif de levage (10) selon l'une des revendications précédentes.

14. Remorque de train de manutention selon la revendication 13, **caractérisée en ce que** la remorque de train de manutention (1) présente un cadre en pont (11) reliant les modules d'essieu (2a, 2b), lequel cadre en pont présente des supports verticaux (11a, 11b) disposés sur les modules d'essieu (2a, 2b) et un longeron (11c) reliant les supports verticaux (11a, 11b), l'arbre de levage (21) du dispositif de levage (10) étant monté rotatif sur le longeron (11c).

15. Remorque de train de manutention selon la revendication 13 ou 14, **caractérisée en ce que** la remorque de train de manutention (1) présente un dispositif de transport (7) pour la réception de la charge, le dispositif de transport (7) étant disposé entre les modules d'essieu (2a, 2b) et étant disposé de manière à pouvoir être soulevé et abaissé par rapport aux modules d'essieu (2a, 2b) au moyen du dispositif de levage (10), la tringlerie de levage (25a ; 25b ; 5c ; 25d) du dispositif de levage (10) étant en liaison fonctionnelle avec le dispositif de transport (7).

16. Remorque de train de manutention selon la revendication 15, **caractérisée en ce que** le dispositif de transport (7) est disposé sur les modules d'essieu (2a, 2b) au moyen d'un guide vertical respectif de manière à pouvoir être soulevé et abaissé.

17. Remorque de train de manutention selon la revendication 15 ou 16, **caractérisée en ce que** le dispositif de transport (7) présente une plate-forme (8) pour le roulement sur celle-ci de dispositifs de roulage au sol présentant des rouleaux en tant que charge, les dispositifs de roulage au sol s'appuyant sur la plate-forme (8) par des rouleaux.

18. Remorque de train de manutention selon la revendication 15 ou 16, **caractérisée en ce que** le dispositif de transport (7) présente des dents pour la réception de la charge.
